Europäisches Patentamt

European Patent Office

Office européen des brevets

(19)

(11) Publication number: **0 270 680**
**A1**

## EUROPEAN PATENT APPLICATION
published in accordance with Art. 158(3) EPC

(12)

(21) Application number: 87903404.9

(22) Date of filing: 16.05.87

Data of the international application taken as a basis:

(86) International application number:
PCT/JP 87/00307

(87) International publication number:
WO 87/07407 (03.12.87 87/27)

(51) Int. Cl.⁴: **G 06 F 13/00**, G 06 F 15/16

(30) Priority: 21.05.86 JP 1163/85

(43) Date of publication of application: 15.06.88
Bulletin 88/24

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **YONEKURA, Mikio, Keio Takao Mansion 1103 1231-36, Hatsusawa-machi, Hachioji-shi Tokyo 193 (JP)**

(74) Representative: **Brunner, Michael John et al, GILL JENNINGS & EVERY 53-64 Chancery Lane, London WC2A 1HN (GB)**

(54) **BOOT LOADING SYSTEM IN A MULTI-PROCESSOR SYSTEM.**

(57) A bootloading system in a multiprocessor system down-loads programs from an auxiliary memory device into a plurality of volatile memories when a power source is switched on. A common loader ROM (42) is shared by boards, and when the power source is turned on, the programs are down-loaded into the volatile memories (12, 22, 32) of respective processors (11, 21, 31) according to a program stored in the loader ROM (42). The number of loader ROMs is reduced, and loading control is simplified.

- 1 -

DESCRIPTION

BOOTLOADING SYSTEM IN MULTIPROCESSOR SYSTEM

Technical Field

The present invention relates to a bootloading system in a multiprocessor system having a volatile memory, and more particularly to a bootloading system in a multiprocessor system having few ROMs and a small space.

Background Art

With the progress of LSI technology and more complex specifications required of control apparatus, there have widely been used systems having plural CPUs for control apparatus such as robot control apparatus and numerical control apparatus. In a robot control apparatus, for example, a main CPU is employed to control the overall system, whereas other CPUs are used to control motors for respective joints or articulations. In a numerical control apparatus, the entire apparatus is controlled by a main CPU and the axes are controlled by other sub-CPUs. With these systems, the sub-CPU boards as well as the main CPU board have respective control programs of their own.

The control apparatus require large-capacity, high-speed memories since more and more complex control is to be performed. These memories should preferably be so-called non-volatile memories which can hold stored programs upon a power failure.  However, high-speed, non-volatile memories are expensive, and a large number of such memories cannot be used in a practical system at present.  One method employed now is to store store control programs in non-volatile, low-speed, large-capacity auxiliary memory devices and to down-load the control programs from the large-capacity auxiliary memory devices to respective CPU boards when the power source is switched on.  More specifically, when the power source is switched on, down-loading ROMs on the respective CPU boards down-load the control programs for the CPU boards from the large-capacity auxiliary memory devices to volatile memories on the respective CPU boards in a given sequence.  To effect this down-loading operation, the CPUs have respective down-loading ROMs.

With this arrangement, however, a ROM used solely for down-loading the program should be mounted on each processor, and the down-loading sequence has to be controlled for the respective CPUs.  Therefore, each time the system arrangement is varied, the software must also be modified.

Disclosure of the Invention

It is an object of the present invention to provide a bootloading system in a multiprocessor system with few ROMs and a small space, the bootloading system solving the above problems and allowing easy down-loading control even when the system arrangement is varied.

To solve the above problems, there is provided according to the present invention a bootloading system in a multiprocessor system having volatile memories for down-loading programs from an auxiliary memory device when the power source is switched on, the bootloading system including:

at least one common loader ROM; and

the bootloading system being arranged to down-load programs into the volatile memories of respective processors according to a program stored in the loader ROM when the power source is switched on.

A loading program for entire boards is stored in the command loader ROM, and control programs are down-loaded from the large-capacity auxiliary memory device into respective CPU boards according to the down-loading program.

Brief Description of the Drawings

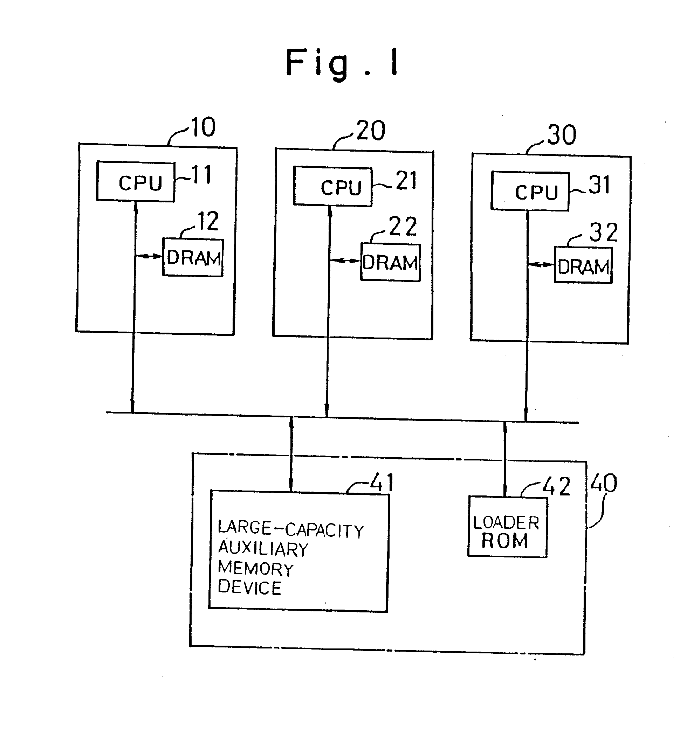

FIG. 1 is a block diagram of an embodiment of the present invention.

Best Mode for Carrying Out the Invention

An embodiment of the present invention will hereinafter be described in specific detail with reference to the drawings.

FIG. 1 shows in block form an embodiment of the present invention. Denoted at 10, 20, 30 are boards which may be robot control apparatus, for example. The board 10 operates as a main CPU for controlling the entire robot and monitors the other boards. The boards 20, 30 control the servomotors or the like for the joints or articulations of the robot according to commands from the board 10. The boards 10, 20, 30 have processors 11, 21, 31, respectively, and DRAMs (dynamic RAMs) 12, 22, 32, respectively. The DRAMs store control programs for the respective boards. The DRAMs operate at high speed and are more inexpensive than other RAMs. The DRAMs are however volatile and require refresh control. Therefore, when the power source is switched on, it is necessary to down-load the control programs from other non-volatile memories into the DRAMs.

A common board 40 is shared by the boards 10, 20, 30 and has thereon a large-capacity auxiliary memory device 41 and a command loader ROM 42. The large-capacity auxiliary memory device 41 comprises a bubble memory which is a magnetic memory and is characterized by a slow access time. However, the bubble memory is a non-volatile memory which magnetically holds the stored programs even if the power source is turned off. A large-capacity bubble memory is easily available. The loader ROM 42 is a ROM with a down-loading program written therein for down-loading the control programs into the respective boards when the power source is turned on.

Operation of the embodiment will be described below. When the power source is turned on, the down-loading program stored in the loader ROM 42 is executed. During this time, the CPUs 11, 21, 31 are in a standby condition. The down-loading program stored in the ROM 42 down-loads, in a predetermined sequence, the control programs stored in the large-capacity auxiliary memory device 41 into the DRAMs 12, 22, 32 on the respective boards 10, 20, 30. The program in the loader ROM 42 is composed of a common portion shared by the boards and different portions for the respective boards. The common portion continuously reads the control programs from the large-capacity auxiliary memory device 41 and writes them into the respective DRAMs. The different portions are data indicating addresses of the large-capacity auxiliary memory device 41 from which the programs should be read and also addresses into which the programs should be written.

When the loading process is over, the respective processors start executing the respective programs from reset vectors to enable the entire system to start processing.

In the above embodiment, all of the loading program is stored in the loader ROM, and the control programs are loaded into all of the boards according to the loading program. However, the loading program of the loader ROM may be loaded into the respective DRAMs, and then the control programs may be loaded into the individual DRAMs under the control of the CPUs on the respective boards. The system is of a simple hardware arrangement since the boards do not require respective loader ROMs but share the loader ROM. Therefore, each board is simple in structure.

CLAIMS

1. A bootloading system in a multiprocessor system having volatile memories for down-loading programs from an auxiliary memory device when a power source is switched on, said bootloading system comprising:

at least one common loader ROM; and

said bootloading system being arranged to down-load programs into the volatile memories of respective processors according to a program stored in the loader ROM when the power source is switched on.

2. A bootloading system according to claim 1, wherein said program stored in the loader ROM is transferred to said volatile memories on respective boards, and the programs are down-loaded under the control of said processors.

3. A bootloading system according to claim 1, wherein said volatile memories comprise DRAMs.

4. A bootloading system according to claim 1, wherein said auxiliary memory device comprises a bubble memory.

Fig.1

0270680

# INTERNATIONAL SEARCH REPORT

International Application No PCT/JP87/00307

## I. CLASSIFICATION OF SUBJECT MATTER (if several classification symbols apply, indicate all) 3

According to International Patent Classification (IPC) or to both National Classification and IPC

Int.Cl⁴ G06F13/00, 15/16

## II. FIELDS SEARCHED

| Minimum Documentation Searched 4 | |
|---|---|
| Classification System i | Classification Symbols |
| IPC | G06F13/00, 15/16 |

| Documentation Searched other than Minimum Documentation to the Extent that such Documents are Included in the Fields Searched 5 | |
|---|---|
| Jitsuyo Shinan Koho | 1955 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 55-164918 (Hitachi Denshi, Ltd.) 23 December 1980 (23. 12. 80) Column 3, lines 6 to 19 (Family: none) | 1, 3 |
| Y | JP, A, 55-164918 (Hitachi Denshi, Ltd.) 23 December 1980 (23. 12. 80) Column 3, lines 6 to 19 (Family: none) | 2, 4 |
| Y | JP, A, 55-162139 (Mitsubishi Electric Corporation) 17 December 1980 (17. 12. 80) Column 4, lines 9 to 18 (Family: none) | 2 |
| Y | JP, A, 58-56121 (Fujitsu Ltd.) 2 April 1983 (02. 04. 83) Column 7, lines 6 to 8 (Family: none) | 4 |

* Special categories of cited documents: 16

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| June 3, 1987 (03. 06. 87) | June 15, 1987 (15. 06. 87) |
| International Searching Authority 1 | Signature of Authorized Officer 20 |
| Japanese Patent Office | |

Form PCT/ISA/210 (second sheet) (October 1977)